# EUROPEAN PATENT SPECIFICATION

(11) **EP 3 054 761 B1**
(45) Date of publication and mention of the grant of the patent: **12.09.2018**
(21) Application number: 14793797.3
(22) Date of filing: 10.10.2014
(51) Int. Cl.: A01G 9/22, B05D 7/24, B32B 27/08, B32B 27/18, B32B 27/20, B32B 27/30, B32B 27/32, B32B 27/36, C08J 5/18, C09D 5/32, C09D 7/61, C08K 9/02, C08K 9/04, C08K 3/22

(54) **USE OF PARTICULATE TITANIUM DIOXIDE FOR REDUCING THE TRANSMISSION OF NEAR-INFRARED RADIATION**
VERWENDUNG VON TITANDIOXIDPARTIKEL ZUR REDUZIERUNG DER TRANSMISSION NIR-STRAHLUNG
UTILISATION DE PARTICULES DE DIOXYDE DE TITANIUM POUR LA RÉDUCTION DE RAYONNEMENT INFRAROUGE PROCHE

(30) Priority: 11.10.2013 EP 13188310
(43) Date of publication of application: 17.08.2016
(73) Proprietor: A. SCHULMAN PLASTICS, 2880 Bornem (BE)
(72) Inventor: SWINNEN, Ann, B-3140 Keerbergen (BE); THEUNYNCK, Dominique, B-2930 Brasschaat (BE); DELMOTTE, Ann, B-1700 Dilbeek (BE); DAPONTE, Tony, B-2070 Zwijndrecht (BE)
(74) Representative: Gevers Patents
(86) International application number: PCT/EP2014/071772
(87) International publication number: WO 2015/052319

(56) References cited:
- WO-A1-2014/041499
- AU-A1- 2009 307 557
- DATABASE CA [Online] CHEMICAL ABSTRACTS SERVICE, COLUMBUS, OHIO, US; 22 April 2004 (2004-04-22), ANDO, SHIGERU ET AL: "High-refractive-index coating composition for fabrication of wavelength-selective optical reflector on glass or plastic substrate", XP002719220, retrieved from STN Database accession no. 2004:329084 -& JP 2004 122364 A (TOTO LTD., JAPAN) 22 April 2004 (2004-04-22)

## Description

### FIELD OF THE INVENTION

The present invention relates to the field of polyolefins film production. More particularly, the invention relates to the production of a film which has a low transmission of infra-red radiation, but for which a high portion of the visual light is passing through in a diffuse manner.

### BACKGROUND OF THE INVENTION

The exposure to sunlight over longer periods of time usually has devastating effects on most physical entities. Hence, colours of objects rapidly fade and many materials may exhibit warping and distortion under the large temperature fluctuations. The prolonged exposure causes deterioration of many materials and their aesthetic aspects, usually called "ageing", typically leading to a significantly shortened lifetime and need for replacement. Also plants, animals and human beings are often negatively affected by a prolonged exposure to sunlight. The shielding from sunlight has therefore become an important feature in many circumstances.

Sunlight radiation occurs for about 45% of its energy as visible light, in the relatively narrow visible range of wavelengths of about 380 to about 700 nanometre (nm), but also for about 5% as ultraviolet (UV) radiation in the range of the shorter wavelengths of 280 to 380 nm and for about 50% as infra-red (IR) radiation in the even wider range of the longer wavelengths from 700 nm up to about 1 mm.

To make transparent surfaces, such as glass, more energy-shielding, special plastics films have been developed, which absorb as selectively as possible the radiation from the range, not visible to the eye, but either the rather damaging UV range or the heat-generating IR range. The infra-red radiation range is commonly divided into, on the one side, the near-infrared radiation range, N-IR or NIR or IR A&B, up to a wavelength of about 2500 nm, and the long-wavelength or far IR range, covering the range up to 50,000 nm or 50 µm, and according to some authors even up to and including 1 mm. Because solar radiation has a major part of radiation energy with wavelengths in the near-IR range, technological improvements have mostly focused thereon. Hence, films have been developed which have a better infra-red absorption function, which provides a more even heat distribution and a more pleasant interior temperature at a high incidence of light. A disadvantage of these films is that the absorbed radiation is converted into heat in the film. Hence, this absorption may cause local temperature increases, which are passed on into the substrate on which the film has been applied. With many substrates, such as glass, such local temperature increases lead to high mechanical stress, and even may lead to glass breakage. A second disadvantage is that the absorbed heat, although transmitted to the interior in a more evenly manner, may still also locally cause a considerable temperature increase, which may still be undesirable.

Hence, a high absorption of the incident solar energy does not necessarily lead to uncomplicated solutions. To limit or avoid these disadvantages as much as possible, films were developed with IR-reflecting properties, especially aimed at reflection in the NIR radiation range. These films offer a reduction of the heat absorption of a vehicle or building equipped therewith in summer, such that cooling energy may be saved.

US 6797396 describes a birefringent dielectric multilayer film transparent for visible light but reflecting at least 50% of light in the wavelength region of 700-2000 nm, and made from different polymer layers and does not contain any metals.

To make an object more resistant to sunlight exposure, solar reflecting particulate materials may be added to the construction material of the object, in particular when this is a polymer, or to the paint or coating with which the object is then coated. Conventional titanium dioxide particulate materials are known to provide high solar reflectance. These particulate materials have a strong white colour, and with the amounts needed are not useful when a dark coloured object is desired. Neither are these particulate materials suitable for objects which need to be transparent to visible light, such as transparent polymer films or clear topcoats.

WO 2009/136141 A1 discloses a titanium dioxide (TiO₂) particulate material having a large crystal size. The particulate material is stated to absorb strongly in the UV region of the spectrum (300-400 nm), to scatter efficiently in the NIR region (700-2500 nm) and to show low scattering and low absorbance in the visible region of the spectrum (400-700 nm). The particulate material thus shows high reflection of NIR radiation and, simultaneously, low reflectance of visible light compared to conventional particulate materials. The special particulate material is combined with a non-white colorant within a vehicle and provides for a single coat covering that has solar reflectivity and a non-white colour. It is therefore suitable for providing at relatively low concentrations a high reflection of NIR radiation and diminished reflectance of visible light compared to conventional particulate materials. The particulate material may further be coated with a metal oxide material to reduce its photocatalytic activity. The particulate materials are suggested for use in a wide variety of applications including a plastic article. The particulate materials disclosed were reported as having a mass average or mass mean crystal size of 0.79, a mean crystal size of 0.97 microns and a mean particle size of 0.85 microns, or a mean particle size of 0.69 microns. An uncoated particulate material sample was added to an alkyd paint resin to record its reflection over black, over the wavelength range of 400-2500 nm. Uncoated particulate material was used in acrylic paint systems having various non-white colours, of which the reflectance spectra were determined. A coated particulate material was incorporated in an alkyd melamine formaldehyde based paint and its weather durability was measured. Uncoated particulate material was used in unplasticised polyvinyl chloride plaques which were coloured with Pigment Green 17 and carbon black, of which the reflectance spectra were measured over the wavelength range of 400-2600 nm and integrated to obtain a result for Total Solar Reflectance. WO 2009/136141 A1 is concerned with and only measures the reflectance of solar radiation, also labelled as "scattering", in particular the radiation in the NIR region of the solar spectrum, at a secondary level also in the UV region. Neither any transmission data nor any absorbance data are collected for any of its products.

In agriculture, the use of polymer films, in particular polyolefin films, has become widespread. One of the more important uses is in the construction of low cost greenhouses, in which a more controlled atmosphere may be established for growing agricultural crops. Another use is the construction of low cost stables or shelters for animals, such as poultry. Such constructions are very fast to erect, and may even be readily moveable and/or transportable.

Especially in hot and sunny climates, it is preferred to use films which reflect a high portion of the infra red radiation of the sunlight, primarily in the so-called Near-Infra-Red (NIR) region from 700 nm up to 2500 nm. When such near-infra-red radiation enters the greenhouse and hits a substrate, it heats up the substrate. This substrate then increases its emission of heat by convection, and also its emission of long wavelength infra-red radiation. Such long wave infra-red radiation is readily reflected by most materials, and its energy, once it entered the greenhouse, thus has a tendency to stay inside the greenhouse. This phenomenon leads to an extra warming up of the atmosphere inside the greenhouse, including increased water evaporation from soil, animals and crops. This puts most crops and animals into a stress situation, which is usually not favouring their growth and economic yield. A low transmission, preferably by reflection, of the infra-red radiation, in particular of the NIR radiation part of the sunlight is thus important for maintaining the temperature inside the greenhouse in the more desired comfort zone for most agricultural crops. Also with the animal shelters, it is important to keep the temperature inside low in order to reduce the stress levels of the animals.

The use of NIR-reflecting films for preventing heat entry is preferred far above its alternatives to reduce inside greenhouse air temperatures, such as ventilation, evaporation, and whitening. In the hot and sunny climates, the ambient air is already rather hot, such that ventilation has only limited effectiveness. These climates are usually also rather arid, with relative humidity of the ambient air dropping down to below 10% at around noon time, and with water resources being scarce and salty. Evaporation of water typically brings a building up of salts, which deteriorates the performance of most cooling systems rapidly. Whitening is inexpensive, but is washed away with rain and also reflects the useful part of the solar radiation spectrum.

There has therefore been a need for the selective reduction of NIR transmission, while letting as much as possible of the visible light pass through.

Indeed, for the photosynthesis reaction, and hence for plant growth, the plants need the radiation in the so-called "Photosynthetically Active Radiation" or "Photo Active Radiation" (PAR) part of the sunlight, which substantially all falls within the range of the visual light, especially in the blue and red region thereof.

For the purpose of sunlight reflection, greenhouse screens have been developed. These screens are usually positioned against the ceilings of permanent greenhouses, usually constructed from glass, and may be opened and folded mechanically, usually by means of a complex system of pulleys and electrical motors, usually in reaction to a change in the weather conditions. The screens are typically woven and comprise strips made of metallised materials or of metal, typically aluminium, which assure substantially full reflection. The screens usually further comprise strips of transparent polymer film, allowing some of the incident sunlight through for the photosynthesis reaction. A drawback of such screens is that a part of the visible light, and hence of the PAR radiation, is reflected.

Furthermore, greenhouses equipped with such screens represent a significant investment to the cultivator. They are therefore primarily affordable with the upper range of crop cultures. A much cheaper alternative may be offered by constructing the greenhouse with an agricultural polymer film.

DE 2544245 discloses a polymethylmethacrylate (PMMA) glazing material for buildings and vehicles containing an interference pigment for the screening of NIR radiation having a wavelength from 800 to 1500 nm. The pigment has a blue-red colour and the light transmitted through the glazing material has a yellow-green colour. When applied to greenhouses, such glazing would have the disadvantage that portions of the visible light which cannot be utilized by the plant are transmitted and convert into heat, while other parts, such as the red part, which can be utilized by the plant, are reflected.

A good agricultural film for greenhouses is characterised by a combination of a low transmission, preferably a high reflectance, of the radiation in the near-infra-red wavelength region with a high transmission of the radiation in the visual wavelength region, in particular of the PAR.

US 2008/0292820 A1 discloses, in paragraphs [0033-0034], IR radiation absorbing particles including or made of lanthanum hexaboride, LaB₆. Lanthanum hexaboride is an effective NIR absorber, with an absorption band centred on 900nm. The IR radiation absorbing nanoparticles may be sized such that they do not materially impact the visible light transmission of the polymeric binder layer. These nanoparticles may for instance have any useful size, such as 1 to 100, 30 to 75, or 30 to 75 nm.

Although the plants need the energy of radiation in the so-called "Photo Active Radiation" (PAR) region, most crops still suffer if they are directly exposed to this part of the sunlight, and may even become burnt. Plants rather prefer to receive this radiation in a diffuse manner. There has therefore been a need for a film having high reflectance for NIR radiation, combined with a high transmission in a diffuse manner of the radiation in the visible region which comprises the PAR radiation.

WO 96/03029 discloses multilayer films composed of alternating layers of polycarbonate (PC), having a refractive index n_{D}=1.587, and polymethylmethacrylate (PMMA), having a refractive index n_{D}=1.491, significantly different from this of PC. The films exhibit a strong reflection of radiation at a wavelength in one particular wavelength band, which band may be shifted by the variation of layer thickness, number of the alternating layers and the selection of the polymeric materials, as long as the difference in refractive index is bigger than 0.03. Example 1 discloses a film transparent below 700 nm and strongly reflecting in the range 715-755 nm. The film contains 100 microlayers having a thickness of 100 nm (each PC layer) and 140 nm (each PMMA layer). In Example 3, the film selectively reflects the green light around 540 nm, yet is transparent for other radiation, including in the NIR region. A drawback of the films proposed in WO 96/03029 is their complexity in production and the selection of polymer materials which are rather scarce. Another drawback of films of which the reflection of radiation is based on interference, is that their performance depends on the angle of incidence of the radiation, in this case the position of the sun relative to the orientation of the film. These films therefore suffer from a relatively limited acceptability in terms of the fields where they may be applied affordably.

WO 96/26070 discloses a three-layer polymer film, all three layers containing an interference pigment consisting of a transparent carrier material in the form of platelets, coated with one or more metal oxides or transparent platelets with a refractive index of more that 1.7. Suitable carrier materials are layered silicates, natural or synthetic mica, glass platelets and silicon dioxide platelets, natural mica being preferred. The metal oxides used may be tin, titanium, chromium, zirconium, cerium, iron and tungsten oxide, and preferably titanium dioxide. The interference colour depends on the thickness of the metal oxide layer. Preferably a pigment having a green interference colour is used. If titanium oxide is used, a layer thickness of 120 to 160 nm will produce a green interference colour. The coated mica particles which are used have a size of 5000 to 40000 nm. A large part of the sunlight's short-wave infrared is reflected by the interference pigments applied. If a green interference pigment is used, then the green part of the incident light which is not utilized by the plant is also reflected.

US 2008/0292820 A1 also describes a multi-layered polymer film which has a haze value of at least 10% to further also control the sun-shielding properties by light diffusion. The reflective and transmissive properties of the multilayer polymeric infrared reflecting film are a function of the refractive indices of the respective layers, in the document addressed as the microlayers. Metals may be incorporated in several successive metallic layers in the film, and they may cooperate as a Fabry-Perot interference filter to reflect the IR light and/or especially the so-called near-IR light. The film further comprises a diffusing layer or surface. Exemplified is a multilayer IR reflecting film containing 224 alternating microlayers of PET and coPMMA, which was laminated to a Fasara San Marino or a Fasara Milano decorative film using an optically clear adhesive. These films are even more complex compared to the films discussed herein above. They thus suffer from the same drawback of limited acceptability in terms of areas of application.

The drawback of these interference-based technologies is that each application may need a film especially designed for it. One particular film may therefore only perform well in one very specific application.

US 2008/0008832 A1 discloses deep-tone coloured roofing granules providing increased solar heat reflectance. A highly reflective white-pigmented inner coating is used as a substrate to reflect additional infrared radiation, while an outer colour coating with IR-reflective interference platelet pigments are used to provide desirable colours. It is shown that the light-interference platelet pigments exhibit significantly higher solar heat reflectance over the traditional inorganic colour pigment, e.g. iron-oxide red pigments.

US 2007/0065641 A1 describes roofing granules with enhanced solar reflectance, comprising a base material of crushed and sized mineral aggregates in the form of granules and an insolubilized coating material covering said granules comprising dark IR-reflective pigments and coarse non-pigmentary titanium dioxide. When incorporated in roof shingles, these granules show a higher Total Solar Reflectance (TSR) as compared to a standard product of the same visual appearance.

JP2005330466A describes the use of 0.5 to 1.5 micrometer diameter IR reflective particles, which may be TiO₂, coated with a resin film transparent to IR radiation. The film coating may contain a substantially non-IR-absorbing pigment. However, although these products have large particle diameters, they are not described as being made from large crystal size titanium dioxide as in the products of the present invention. As discussed below in more detail, the particle size and crystal size of a TiO₂ particle are not necessarily the same.

There therefore remains a need for a simple solution to provide polymer films having a high reflectance for NIR radiation, combined with a high transmission of visible radiation, whereby the radiation in the visible region of the spectrum is transmitted in a diffused manner. A simple solution is needed in order to penetrate a number of very cost-sensitive applications such as greenhouses and animal shelters.

The present invention aims to obviate or at least mitigate the above described problem and/or to provide improvements generally.

### SUMMARY OF THE INVENTION

According to the invention, there is provided the use as defined in any of the accompanying claims.

The invention therefore provides the use of a particulate material in a polymer article for reducing the transmission of near-infrared radiation and for allowing transmission of visible light through the article, whereby
- the particulate material is based on crystalline titanium dioxide, i.e. containing TiO2, in the anatase and/or the rutile crystal form,
- the particles of the particulate material are coated with an organic and/or inorganic coating layer,
- at least 20% by weight of the particulate material particles have a particle size of at least 400 nm and at most 1000 nm, as measured by X-Ray disk centrifuge,
- at least 1.5% by weight and at most 40% by weight of the particles in the particulate material have a particle size of less than 400 nm and at least 280 nm.

In another embodiment, the invention provides for the use of a polymer composition containing the particulate material as defined in the use of the particulate material according to the present invention in a concentration from 500 ppm by weight up to 70%wt, relative to the total weight of the composition, in the production of a polymer article for reducing the transmission of near-infrared radiation and for allowing transmission of visible light through the article.

In yet another embodiment, the invention provides a polymer film composition containing the particulate material as defined in the use according to the present invention in a concentration from 500 ppm by weight up to 3.0%wt, relative to the total weight of the composition, preferably at least 1000 ppm, more preferably at least 1500 ppm, even more preferably at least 2000 ppm and yet more preferably at least 2500 ppm by weight, and optionally at most 2.0%wt, preferably at most 1.0%wt, more preferably at most 8000 ppm by weight, even more preferably at most 7000 ppm by weight, yet more preferably at most 6000 ppm, preferably at most 5000 ppm, relative to the total weight of the composition, in the production of a polymer film for reducing the transmission of near-infrared radiation and for allowing transmission of visible light through the polymer film.

We have found that the particulate material according to the present invention is highly suitable in the production of an agricultural film or fabric. The high amount of particles in the particulate material having a particle size in the 400-1000 nm range provide for a reduced transmission of radiation in the NIR wavelength region of 700-2500 nm, preferably for a high reflection of this NIR radiation as part of sunlight, compared to the conventional TiO₂-based particulate materials known from the art. The particle size of conventional rutile TiO2 is from 250 to 400 nm, whilst conventional anatase TiO2 has a particle size of from 200 to 400 nm. This reduced transmission of NIR radiation brings a reduced influx of solar radiation energy into a construction made with a polymer film comprising the particulate material, such as a greenhouse or an animal stable or shelter, such that the temperature of the atmosphere in the construction may be kept lower, leading to less water evaporation, to a lower stress level of plants, crops and/or animals which are kept underneath the polymer film or inside the construction.

We have further found that the particulate material may also be used in a silage film, i.e. a film which is used for the outdoor storage of natural produce such as hay and other plant cuttings for animal green feed, usually towards an upcoming winter period, which natural produce is preferably undergoing an anaerobic fermentation in order to increase its lactic acid content thereby increasing the nutritional value of the natural produce. We have found that the use of the particulate material according to the present invention also reduces the temperature of the silage film as well as of the enclosure defined by the silage film. We have found that this reduction in temperature provides for better oxygen barrier properties of the film and hence for a more effective anaerobic environment inside the enclosure promoting the desired fermentation.

We have further found that the relatively minor amount of particles in the particulate material having a particle size in the 280-400 nm range provide for an increased transmission of radiation in the visible light wavelength region of 400-700 nm, in particular in the PAR part of that region, such as the blue and the red light region of the visible part of the spectrum. This brings the advantage that, in comparison with the conventional TiO₂ particulate materials known in the art, more of the part of the sunlight which is necessary for the photosynthesis reaction is allowed to pass through the film and reach the crops growing in the greenhouse, whereby the growth of the crops as well as their useful yield may be enhanced. The increased transmission of visible light is also beneficial to any animal life underneath the film containing the particulate material. Animals inside a shelter or stable with a film cover containing the particulate material will be more comfortable under the increased daylight exposure, and hence experience a lower stress level, as compared to films containing the conventional TiO₂ particulate materials known in the art. Also the bees inside the greenhouse, which assure the pollination of the flowers of the crops which need to develop into the useful products, will be able to perform better their pollination task under the increased daylight exposure provided by a film cover containing the particulate material, as compared to the conventional TiO₂ particulate materials known in the art.

We have further found that the minimum amount of particles in the particulate material having a particle size in the 280-400 nm range also provide for a high degree of diffusion of the transmitted visible light of the sunlight spectrum. Particularly useful in hot and sunny climates, but also playing to some extent in the more moderate climates, this brings the advantage that the crops and/or animals underneath the film containing the particulate material are also less directly exposed to the visible part of the sunlight, such that they run a lower risk of being overheated and even burnt, such that again their stress level is reduced.

We have further found that the particulate material in the use according to the present invention exhibits some reduced transmission also of radiation in the UV part of the solar spectrum, which ranges from about 200 to about 380 nm. When used in relatively high particulate material dosing in the film, such as with silage film, this may further improve the oxygen barrier properties of the film, and also discourage insects and flies from getting underneath the silage film. When used in relatively modest particulate material dosing in the film, such as with agricultural film for greenhouse construction, this still allows for the transmission of UV light having a wavelength of around 340 nm, a wavelength which is not noticed by the human eye but which is captured by the bees. This will further enhance the comfort level of bees underneath the film containing the particulate material, such that these insects are more comfortable and active in the performance of their pollination task.

We have also found that the coating layer on the particulate material particles may provide a reduced photocatalytic activity of the particulate material towards the polymer matrix in which it is embedded. Titanium dioxide is a strong UV adsorbent, and upon such exposure the absorbed energy is liberated by the release of radicals. These radicals are able to deteriorate most polymer matrices. The provision of a physical coating layer, a sort of physical shell around the titanium dioxide, slows down the migration of the radicals into the matrix, such as by increasing the path length before they are able to reach the matrix, whereby the time to reach the matrix may be significant in comparison to the half life time of the radical itself, such that most of the radicals may have disappeared before they are able to reach the polymer matrix.

We have further found that the coating layer may further provide improved dispersibility of the particulate material particles, and reduced yellowing and/or better opacity of the article containing the particulate material.

### DETAILED DESCRIPTION

The present invention will be described in the following with respect to particular embodiments and with reference to certain drawings but the invention is not limited thereto but only by the claims. Any drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B. Accordingly, the terms "comprising" and "including" encompass the more restrictive terms "consisting essentially of" and "consisting of".

In the context of the present invention, a film is defined as a material extending outwards in two dimensions and characterised by a material thickness. In this definition, a film may also be a rigid sheet. The film may have one or more layers. The film may have a material thickness of up to several millimetres, such as 5 mm, but also be thinner, such as 4 mm, 3 mm, 2 mm or 1 mm. The film may have multiple layers which may be in contact with each other, but which may also be spaced from each other, such as in a multiple layer polycarbonate or PMMA sheet. The film may also be used as part of a woven fabric, such as in shading screens for greenhouses.

In the context of the present invention, particle size is defined as the diameter of the smallest sphere fully encompassing the particle.

In the context of the present invention, light, and in particular visible light, is defined as a form of radiation energy, at one or more wavelengths, which, when striking an object, may be absorbed, reflected and/or transmitted. Generally, a combination of these three phenomena takes place.

In the context of the present invention, concentrations are expressed in weight units, unless otherwise specified. The term "average" refers to the statistical mean unless otherwise specified. Average size is referring to the "geometric volume mean size", unless stated otherwise.

Although average particle size is averaged on a weight basis, average crystal size is given on a number basis because the analytical techniques used provide their results on this basis, unless stated differently.

In an embodiment of the present invention, the use is further for diffusing at least part of the photo-active radiation part of the visible light, and preferably most of the visible light, preferably for increasing the percent haze provided by the article, more preferably the haze being measured according to ASTM D1003. This brings the advantage that anything which is shielded from the sun by the polymer article according to the use of the present invention is less exposed to the direct incidence of the visible part of the sunlight, such that local overheating is reduced. This brings an advantage to plants and crops for a reduced risk for local burning, to animals for a reduced risk for local overheating, and increases the comfort level and hence reduces the stress level of living creatures under such shield.

In an embodiment of the present invention, at least part of the UV light spectrum, preferably the UV light perceived by bees, is transmitted by the polymer article, preferably in a diffused manner. It has been found that the bees need a specific spectrum of the UV light, estimated at around 340 nm, to enhance the pollination of the plants grown in the greenhouses.

In an embodiment of the present invention, the particle size distribution of the particulate material particles shows a major peak in the range of 400-1000 nm, preferably at most at 900 nm, more preferably at most at 800 nm, even more preferably at most at 700 nm, preferably at most at 650 nm, more preferably at most at 600 nm, also preferably at least at 450 nm, more preferably at least at 500 nm, and also preferably the particle size distribution of the particulate material particles being unimodal and the single peak thereof being in the specified range. This brings the advantage of further reducing the transmission of the radiation in the NIR region of the solar spectrum and/or further enhancing the effectiveness of the particulate material in achieving the technical effects which are the purpose of the use according to the present invention.

In an embodiment of the present invention, the particulate material particles have an average particle size of at least 400 nm and up to 1200 nm, preferably more than 400 nm, more preferably at least 450 nm, even more preferably at least 500 nm, preferably at least 600 nm, more preferably at least 700 nm, yet more preferably at least 800 nm, and optionally at most 1100 nm, preferably at most 1000 nm, more preferably at most 900 nm, even more preferably at most 800 nm, yet more preferably at most 700 nm, preferably at most 650 nm, more preferably at most 600 nm and even more preferably at most 550 nm. This brings the advantage of further reducing the transmission of the radiation in the NIR region of the solar spectrum and/or further enhancing the effectiveness of the particulate material in achieving the technical effects which are the purpose of the use according to the present invention.

In an embodiment of the present invention, at least 30% by weight of the particulate material particles have a particle size of at least 400 nm and at most 1000 nm, preferably at least 40%, more preferably at least 50%, even more preferably at least 60%, yet more preferably at least 70%, preferably at least 80%, more preferably at least 90% by weight of the particulate material particles having a particle size in the specified range, and preferably this particle size range being at most 900 nm, more preferably at most 800 nm. This brings the advantage of further reducing the transmission of the radiation in the NIR region of the solar spectrum and/or further enhancing the effectiveness of the particulate material in achieving the technical effects which are the purpose of the use according to the present invention.

In an embodiment of the present invention, at least 60% by weight of the particulate material particles have a particle size of at most 1000 nm, preferably at least 70%wt, more preferably at least 80%, even more preferably at least 90% and yet more preferably at least 95% by weight of the particulate material particles having a particle size of at most 1000 nm. This brings the advantage of further reducing the transmission of the radiation in the NIR region of the solar spectrum and increasing the diffusion of the visible light which is transmitted, and/or further enhancing the effectiveness of the particulate material in achieving the technical effects which are the purpose of the use according to the present invention.

In an embodiment of the present invention, at least 2.0%wt by weight of the particles have a particle size of less than 400 nm and at least 280 nm, preferably at least 3.0%wt, more preferably at least 4.0%wt, even more preferably at least 5.0%wt, preferably at least 7.0%wt, more preferably at least 10%wt, even more preferably at least 15%wt of the particles having a particle size in the specified range, and optionally at most 35%wt, preferably at most 30%wt, more preferably at most 25%wt, preferably at most 20%wt, more preferably at most 15%wt and yet more preferably at most 10%wt of the particles having a particle size in the specified range of 280-400 nm. This brings the advantage of increasing the diffusion of the visible light of the solar radiation spectrum, while maintaining a high transmission of the visible light, in particular the PAR part thereof, which is required for the photosynthesis reaction in plants.

In an embodiment of the present invention, the particulate material particles, prior to their use, have been treated to selectively remove particular size fractions, preferably to remove any particles which have a particle size of at least 5000 nm, preferably at least 3000 nm, preferably the particles being removed by a centrifugation treatment. This brings the advantage that less effective particles in the particulate material are reduced and/or avoided, such that the overall effectiveness of the particulate material in achieving its desired technical effects is enhanced.

In an embodiment of the present invention, the titanium dioxide has a TiO₂ content of at least 80%wt, preferably at least 85%wt, more preferably at least 90%wt, preferably at least 92%wt, more preferably at least 93%wt. This brings the advantage that the particulate material is more effective in achieving its desired effects.

In an embodiment of the present invention, the polymer article contains at most 100 ppm by weight of Fe₂O₃, preferably at most 80 ppm, more preferably at most 60 ppm, even more preferably 40 ppm, yet more preferably at most 20 ppm, preferably at most 10 ppm, more preferably at most 5 ppm, even more preferably at most 1 ppm in order to prevent early degradation of the polymer film.

In an embodiment of the present invention, at least 50% by weight of the TiO₂ crystals are in the rutile crystal form, preferably at least 60%, more preferably at least 70%, even more preferably at least 80%, preferably at least 90%, more preferably at least 95%, even more preferably at least 99%, yet more preferably at least 99.5% by weight. This brings the advantage that the rutile form offers a higher refractive index, resulting in more effective particulate material particles in achieving their desired effects. A further advantage is that less particulate material is needed in order to achieve a desired level of transmission hindrance to the NIR radiation, in combination with a desired level of transmission of visible light. When optimised, this brings the advantage that the achieved effects are stronger.

In an embodiment of the present invention, the titanium dioxide has an average crystal size of at least 400 nm and up to 1200 nm, preferably more than 400 nm, more preferably at least 450 nm, even more preferably at least 500 nm, preferably at least 600 nm, more preferably at least 700 nm, yet more preferably at least 800 nm, and optionally at most 1100 nm, preferably at most 1000 nm, more preferably at most 900 nm, even more preferably at most 800 nm, yet more preferably at most 700 nm, preferably at most 650 nm, more preferably at most 600 nm, even more preferably at most 550 nm The applicants have found that this feature brings the advantage of further reducing the transmission of the radiation in the NIR region of the solar spectrum and increasing the diffusion of the visible light which is transmitted, and/or further enhancing the effectiveness of the particulate material in achieving the technical effects which are the purpose of the use according to the present invention.

In an embodiment of the present invention, the titanium dioxide is substantially white, preferably the particulate material having a lightness value L* in the CIE L*a*b* colour space of greater than 80, preferably at least 85, more preferably at least 90, even more preferably at least 95, with an absolute value of a* of less than 5 and an absolute value of b* of less than 5. The applicants have found that in combination with the amount of particles having a particle size of less than 400 nm, that this feature brings the effect of enhanced diffusion of the visible light transmitted through the article, over the full range of the visible light, such that the risk for local overheating on anything shielded by the article from incident sunlight is more effectively reduced. The CIE L*a*b* colour space describes all the colours visible to the human eye and serves as a device-independent model to be used as a reference. The three coordinates of CIELAB represent the lightness of the colour (L* = 0 yields black and L* = 100 indicates diffuse white; specular white may even be higher), which is expressed as its position between red/magenta and green (a*, negative values indicate green while positive values indicate magenta) and its position between yellow and blue (b*, negative values indicate blue and positive values indicate yellow). An L* value of 80 already indicates a light whitish colour, while a value of 95 indicates a very light colour. A lighter colour exhibits a lower heat absorption as compared to a darker colour. The film will therefore, thanks to this feature, absorb less heat and thus may have a longer lifetime because the ageing process will be slowed down.

In an embodiment of the present invention, the coating layer represents from 0.50 to 20%wt relative to the total weight of the particulate material particles, preferably at most 15%wt, more preferably at most 10%wt, even more preferably at most 5%wt, yet more preferably at most 3%wt relative to the total weight of the particulate material particles. We have found that these levels are effective in achieving the desired effects of reduced photocatalytic activity, as well as the other benefits associated with the coating layer. The effectiveness of the coating layer may depend on the selection of the material. A coating layer comprising SiO₂ may therefore be more effective as compared to a layer comprising similar concentration of Al₂O₃, and hence may be applied thinner and represent a lower weight as compared to the total weight of the particulate material particles.

In an embodiment of the present invention, the coating layer comprises one or more oxide materials. We have found that these materials are particularly effective in reducing the photocatalytic activity of the particulate material particles.

In an embodiment of the present invention, the oxide material is an oxide and/or hydrated oxide, i.e. a hydroxide, of one or more elements which are, referring to the Periodic Table of IUPAC dated 22 June 2007:
- group 4 and 12 transition metals selected from Ti, Zr and Zn and/or
- group 13 to 15 p-block elements selected from Si, Al, P and Sn and/or
- lanthanides,
preferably the material being selected from Al₂O₃, SiO₂, ZrO₂, CeO₂, P₂O₅, and combinations thereof, more preferably the oxide material comprising P₂O₅, more preferably in combination with Al₂O₃ and/or SiO₂. We have found that these compounds are particularly effective in reducing the photocatalytic activity of the particulate material particles.

In an embodiment of the present invention, the particulate material particles have been submitted to an organic surface treatment, preferably with a compound selected from a polyol, an amine, an alkanolamine, a silane and a silane derivative, such as for example triethoxyoctylsilane, a silicone derivative, trimethylolpropane, pentaerythritol, triethanolamine, alkyl phosphonic acid, n-octyl phosphonic acid, trimethylolethane, and mixtures thereof. We have found that such treatment improves the dispersibility of the particulate material particles in its surrounding matrix.

In an embodiment of the present invention, the article is a polymer film, preferably a polyolefin film, preferably a film based on a polymer having ethylene as at least one monomer, more preferably a copolymer of ethylene with at least one alfa-olefin or vinyl ester copolymer, even more preferably a film based on a material selected from the list consisting of polyethylene, high-density polyethylene (HDPE), low-density polyethylene (LDPE), linear-low-density polyethylene (LLDPE), metallocene linear-low-density polyethylene (mLLDPE), ethylene vinyl acetate copolymer, ethylene methyl acetate copolymer, ethylene butenyl acetate copolymer, ethylene vinyl alcohol copolymer (EVOH), polyethylene terephthalate copolymer (PET), polycarbonate (PC), polymethylmethacrylate (PMMA), polypropylene (PP) and mixtures thereof. We have found that these polymers are particularly suitable as basis for agricultural film or sheet, consisting of one or more layers.

In an embodiment of the present invention, the polymer of the article further comprises at least one of the additives known in the art, such as at least one additive selected from the list consisting of a UV absorber, a near IR absorber, a far IR absorber, a near IR reflector, a far IR reflector, a stabilizer, an antioxidant, a processing aid, an antistatic agent, a colorant, an inorganic salt, a pearl-luster pigment, a NIR-reflective substance, an antifogging agent, a filler, an antiblock agent, a light stabilizer, a slip agent, a UV blocker, a diffusing agent, and combinations thereof. It has been found that such additives provide complementary properties to the article and/or enhance the effects offered by the present invention.

In an embodiment of the use of the polymer composition according the present invention, the polymer composition contains the particulate material in a concentration from 500 ppm by weight up to 70%wt, relative to the total weight of the composition. We have found that these levels are effective in achieving the desired effects. Depending on the concentration level, the level of achievement of the different effects may be further affected. A higher concentration thereby leads to a more effective hindrance of the transmission of the NIR radiation, as well as to a higher haze and also a higher degree of diffusion of the transmitted visible light, while on the other hand a lower concentration level may increase the transmission of the visible light, in particular of the PAR part thereof. In hot and sunny climates, it will therefore be beneficial to use according to the present invention to work with a higher concentration of the particulate material, while in the more moderate climate a lower particulate material concentration may readily be acceptable and even desirable because of the higher PAR transmission and its associated benefits to plant growth.

In an embodiment of the present invention, the polymer composition is a masterbatch composition, preferably the masterbatch composition being based on a polyolefin, more preferably on a polymer having ethylene as at least one monomer, more preferably a copolymer of ethylene with at least one alfa-olefin or vinyl ester copolymer, even more preferably on a polymer selected from the list consisting of polyethylene, high-density polyethylene, low-density polyethylene, linear-low-density polyethylene, metallocene linear-low-density polyethylene (mLLDPE), ethylene vinyl acetate copolymer, ethylene methyl acetate copolymer, ethylene butenyl acetate copolymer, ethylene vinyl alcohol copolymer, polyethylene terephthalate copolymer (PET), polycarbonate (PC), polymethylmethacrylate (PMMA), polypropylene (PP), and mixtures thereof.

In an embodiment of the present invention, the masterbatch composition contains from 2.0%wt to 70%wt of the particulate material, preferably at most 60%wt, more preferably at most 50%wt, even more preferably at most 40%wt, yet more preferably at most 30%wt, preferably at most 25%wt, more preferably at most 20%wt, even more preferably at most 15%wt and yet more preferably at most 10%wt, preferably at most 5.0w%, more preferably at most 3.0w% of the particulate material. We have found that these concentrations are providing a masterbatch which is very suitable for further downstream use, such as in the production of an agricultural polymer film or sheet, consisting of one or multiple layers.

In an embodiment of the use of the polymer film composition according to the present invention, the polymer film composition contains the particulate material in a concentration from 500 ppm by weight up to 3.0%wt, relative to the total weight of the composition, preferably at least 1000 ppm, more preferably at least 1500 ppm, even more preferably at least 2000 ppm and yet more preferably at least 2500 ppm by weight, and optionally at most 2.0%wt, preferably at most 1.0%wt, more preferably at most 8000 ppm by weight, even more preferably at most 7000 ppm, yet more preferably at most 6000 ppm, preferably at most 5000 ppm by weight, relative to the total weight of the composition, in the production of a polymer film for reducing the transmission of near-infrared radiation and for increasing the transmission of visible light through the polymer film, preferably also for the increased diffusion of the visible light through the polymer film. We have found that these levels are effective in achieving the desired effects. Depending on the concentration level, the level of achievement of the different effects may be further affected. A higher concentration thereby leads to a more effective hindrance of the transmission of the NIR radiation, as well as to a higher haze and also a higher degree of diffusion of the transmitted visible light, while on the other hand a lower concentration level may increase the transmission of the visible light, in particular of the PAR part thereof. In hot and sunny climates, it will therefore be beneficial to use according to the present invention to work with a higher concentration of the particulate material, while in the more moderate climate a lower particulate material concentration may readily be acceptable and even desirable because of the higher PAR transmission and its associated benefits to plant growth and animal comfort.

In an embodiment of the present invention, the polymer film composition is based on a polyolefin, more preferably on a polymer having ethylene as at least one monomer, more preferably on a polymer selected from the list consisting of polyethylene, high-density polyethylene, low-density polyethylene, linear-low-density polyethylene, metallocene linear-low-density polyethylene (mLLDPE), ethylene vinyl acetate copolymer, ethylene butenyl acetate copolymer, ethylene vinyl alcohol copolymer, polyethylene terephthalate copolymer, polycarbonate (PC), polymethylmethacrylate (PMMA), polypropylene (PP), and mixtures thereof.

In an embodiment of the present invention, the polymer film has at least one layer which is made from the polymer film composition.

In an embodiment, the polymer film comprising at least one layer which is made from the polymer film composition according to the present invention further comprises at least one of the additives known in the art, such as at least one additive selected from the list consisting of a UV absorber, a near IR absorber, a far IR absorber, a near IR reflector, a far IR reflector, a stabilizer, an antioxidant, a processing aid, an antistatic agent, a colorant, an inorganic salt, a pearl-lustre pigment, a NIR-reflective substance, an antifogging agent, a filler, an antiblock agent, a light stabilizer, a slip agent, a UV blocker, a diffusing agent, and combinations thereof.

In an embodiment of the present invention, the at least one layer in the polymer film is a top layer of a multilayer film, which is further comprising at least one extra film layer, optionally at least 2, 3, 4, 5, 6, 7, 8, 9, 10, 11, 12, 13, 14 or even 15 extra film layers. When properly installed, i.e. in the right direction relative to the incident energy radiation, the top layer is thereby not only shielding the underlying objects and/or animals, but also the underlying layers of the entire film, which represents a significant advantage with respect to the expected life time of the film, usually regardless of its application.

In an embodiment of the present invention, the polymer film has a transmission in the visible light region, being defined as the wavelength region of 380-700 nm of at least 30%, preferably at least 40%, more preferably at least 50%, preferably at least 55%, more preferably at least 60%, even more preferably at least 65%.

In an embodiment of the present invention, the polymer film has a transmission in the photosynthetically active part of the visible region of the sunlight, the latter being defined as the wavelength region of 400-700 nm, of at least 30%, preferably at least 40%, more preferably at least 50%, preferably at least 55%, more preferably at least 60%, even more preferably at least 65%.

In an embodiment of the present invention, the polymer film has a transmission of the near-infrared radiation in the wavelength region from above 700 up to 2500 nm of at most 90%, preferably at most 85%, more preferably at most 80%, even more preferably at most 75%, preferably at most 70%, more preferably at most 60%, even more preferably at most 50%, yet more preferably at most 40%. The applicants have found that the film according to the present invention is thus more effective in achieving its desired effects of keeping the NIR radiation out.

In an embodiment of the present invention, the polymer film has a haze of at least 20%, preferably at least 25%, more preferably at least 30%, even more preferably at least 35%, preferably at least 40%, more preferably at least 50%, even more preferably at least 60%, yet more preferably at least 70%, preferably at least 80%, more preferably at least 90%, preferably the haze being measured according to ASTM D1003.

In an embodiment of the use according to the present invention, the use is for reducing the temperature inside a greenhouse and/or for increasing the crop yield inside a greenhouse.

Processes which are suitable for preparing the titanium dioxide based particulate material according to the present invention include, but are not limited to, the sulphate process, the chloride process, the fluoride process, the hydrothermal process, the aerosol process and the leaching process. Further details for enablement of the present invention may be found in US2013/0048925, and the documents referred therein.

The titanium dioxide itself may comprise one or more dopants which may be incorporated during its preparation by known processes. The dopants may include but are not limited to calcium, magnesium, sodium, nickel, aluminium, antimony, phosphorus, and/or cesium. The titanium dioxide particles may be treated as known in the art with a coating agent to form coated titanium dioxide or coated doped titanium dioxide. For example, the first particulate material may be dispersed in water along with the coating agent. The coating agent may be an inorganic oxide or hydrous oxide, such as Al₂O₃, SiO₂, ZrO₂, P₂O₅, sodium silicate, aluminium chloride, etc. After coating, the first particulate material may be washed and dried before being ground, for example, in a fluid energy mill or micronizer, to separate particles stuck together by the coating. At this milling stage, an organic surface treatment, including polyols, amines, alkyl phosphonic acids and silicone derivatives, may also be applied if desired. Further details may be found in US 2013/0209717, and the documents referred therein.

Suitable titanium dioxide based particulate materials for the use according to the present invention may be, but are not limited to, the Altiris® 550 and/or Altiris® 800 type grades, both produced by the company Huntsman.

### ANALYTICS

### CRYSTAL SIZE

The average crystal size may preferably be determined by transmission electron microscopy (TEM) on a rubbed out sample with image analysis of the resulting photograph, e.g. using a Quantimet 570 Image Analyser. This may be validated by reference to the latex NANOSPHERE™ size standard 3200 from NIST with a certified size of 199+/-6 nm.

### PARTICLE SIZE

The average particle size may be preferably determined by X-ray sedimentation. To measure particle size in this context, the product is subjected to high shear mixing, in the presence of a suitable dispersant, to disperse the particles without comminution. The particle size distribution is measured using a Brookhaven XDC X-ray disk centrifuge. Average particle size, and particle size distribution, on a weight basis, may be recorded.

### ASTM 1003D

The absorption and scattering behaviour of a transparent specimen will determine how much light will pass through and how objects will appear through the transparent product. The objective measurement of transparency may be made using a haze meter, e.g. using a BYK Gardner Haze-gard dual, according to the following principle: a light beam strikes the specimen and enters an integrating sphere. The sphere's interior surface is coated uniformly with a matte white material to allow diffusion. A detector in the sphere measures total transmittance and transmission haze. A ring sensor then detects the narrow angle scattering light (clarity).

### TRANSMISSION AND REFLECTANCE

Transmission and/or reflectance may preferably be determined by measuring the amount of transmitted light in the UV, visible and near-infrared region, preferably using a UV-VIS-NIR spectrophotometer, such as a Perkin Elmer Lambda 950 equipped with a large integrated sphere PELA 1000 of 150 mm. This enables the measurement of specular, diffuse and reflectance of materials as well as total transmission of transparent and semi-opaque materials. The amount of transmitted light passing through a sample may be detected with this apparatus in a wavelength range from 190 nm up to 3300 nm.

### HAZE

Haze is preferably measured according to ASTM D1003, and is defined therein as the percentage of the light transmitted through an object which is scattered more than 2.5° away from the direction of the incident beam. Materials with haze values greater than 30% are considered diffusing. Testing is preferably performed with a Spectrophotometer, according to procedure B.

### ANGULAR TRANSMITTANCE

Angular transmittance is preferably measured by using a Transvision system consisting of a large integrating sphere with an internal diameter of 1 m, a CCD array spectrometer, a Xenon light source and whereby the system is designed according to ISO 13468. The device meets the specifications of the measurement protocol developed by TNO and Wageningen UR (see: Ruigrok J., 2008, "Lichtmeetprotocol kasdekmaterialen", GLAM, TNO report 034-DTM-2010-03385, and Swinkels, 2012, "Transvision: a light transmission measurement system for greenhouse covering materials", Acta Hort., 956:563-568).

The device measures angular and hemispherical transmittance, as well as spectral haze (1.5°) in the range of 350-2000 nm for clear and diffuse samples. The angle of incidence is the angle between a beam incident on a surface and the line perpendicular to the surface at the point of incidence, called the normal. The direct transmittance for x° is defined as the transmittance of light with an angle of incidence x, measured in degrees according to a degree system having 360 degrees for a full circle.

### EXAMPLES

Masterbatches according to the present invention (IMB 1 and 2) as well as comparative masterbatches (CMB 1 and 2), all of which the compositions are shown in Table 1, were produced using a twin screw extruder of the type ZSK26, obtained from Coperion, equipped with 14 consecutive temperature zones.

As base resin a ground low-density polyethylene (LDPE) general purpose polymer material was used having a melt index or melt flow index of 21 g/10 min, measured according to ASTM D1238 and ISO 1133 at 190°C with the standard weight of 2.16 kg, and for which the internal code was Ico N2105-1000. In the CMB 1, Iriodin® SHR 9870 was used as an interference pigment, as supplied by Merck. This pigment is widely used as an NIR blocker. CMB 2 comprises a conventional pigmentary rutile TiO2 grade, Tipure R103-07, supplied by DuPont de Nemours, which is typically used for outdoor applications.

Altiris® types 550 and 800 were respectively added to the invention masterbatches IMB1 and IMB2. These are TiO2 grades, supplied by the company Huntsman, which are especially designed for NIR blocking purposes with a selective particle size distribution. The Altiris® type TiO2 grades contain more than 93.0 %wt TiO2, with more than 99.0 %wt thereof in the rutile crystal form. The TiO2 particles are coated with a material which is based on oxides of Aluminium and/or Silicium, and have not been subjected to a carbon treatment. Altiris® grades of the types 550 and 800 have a published particle size ranging from 0.04-2.28 µm and 0.04-2.837 µm respectively, as measured by laser diffraction spectrometry (LDS) (BT-2003, Dandong better size Instruments, Ltd.). The dispersant used was sodium henamephosphate. The refractive index of the TiO2 particles and the surrounding medium were 2.81 and 1.333, respectively. The measured median particle size is 0.36 µm for the Altiris® 550 and 0.41 µm for the Altiris® 800 grade (J. Song, 2014).

The twin-screw extruder of the type ZSK 26 was operated at an output of 20 kg/hr and at a speed of 400 rpm. The following temperature set points were used for the compounding of the different masterbatches: T zones 2 till 9 = 180°C and T zone 10 till 14 = 170°C.

**Table 1**

| **wt%** | **CMB 1** | **CMB 2** | **IMB 1** | **IMB 2** |
|---|---|---|---|---|
| Ico N2105-1000 | 59.8 | 59.8 | 59.8 | 59.8 |
| Iriodin®SHR 9870 | 40 | | | |
| Altiris® 550 | | | 40 | |
| Altiris® 800 | | | | 40 |
| Tipure R103-07 | | 40 | | |
| Songnox 217 BFF | 0.2 | 0.2 | 0.2 | 0.2 |

Escorene FL 00209, obtainable from the company Exxon Mobil Chemical, is an ethylene vinyl actetate (EVA) grade containing 9% vinyl acetate (VA). Escorene FL 00209 was dry blended with concentrations ranging from 0.2% to 1.0% of the comparative masterbatches CMB 1 and 2 and with the working masterbatches IMB 1 and 2, and each of the blends was subsequently fed into a blown film extrusion line of the Macchi 55 type, using a die with a diameter of 180 mm, a throughput of 75 kg/hr, and a blow-up ratio (BUR) of about 1.84, in order to produce a set of EVA-based blown monofilms of about 150 µm thickness.

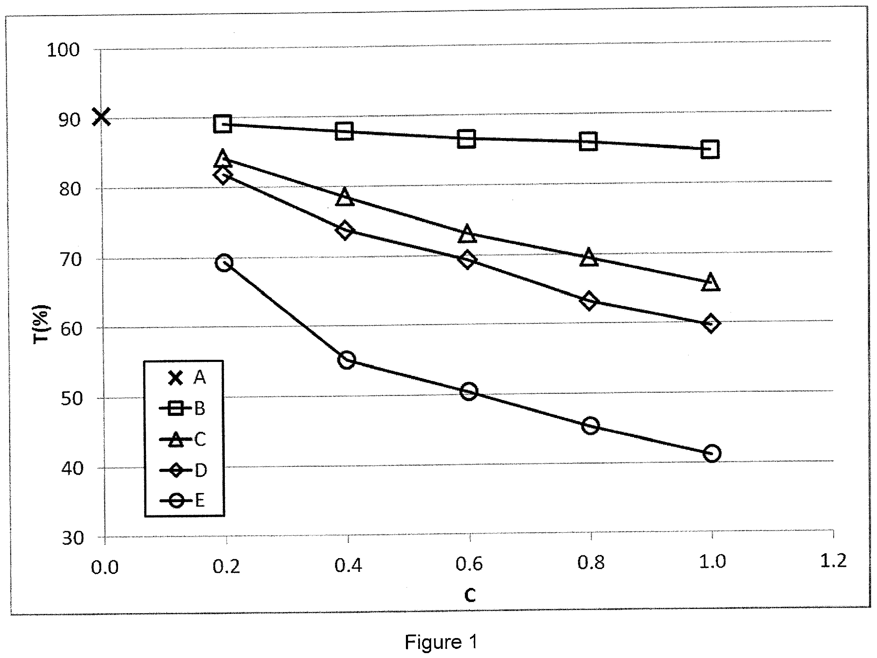

Figure 1 shows the total visible light transmission T, in the full range from 400 to 700 nm, as a function of the concentration C of the additive in the films, expressed in wt%, shown as the abscis. On Figure 1, the label A represents a blank sample containing Escorene only, without any additive, hence at 0%, label B designates the CMB 1, containing Iriodin® SHR 9870, label C represents the IMB 2 containing Altiris® 800, label D represents the IMB 1 containing Altiris® 550, and label E designates the CMB 2 containing Tipure R103-07.

The influence on the total light transmission in the PAR area of an increasing additive concentration in CMB 1 is relatively limited, whereas adding a general purpose TiO2 grade, such as in the CMB 2, results in a significant decrease in total light transmission at increasing concentrations.

In comparison to the currently known NIR technology, which is represented by the CMB 1 samples, the samples with the Altiris® grades show a lower visible light transmission. However, in comparison to the samples containing the conventional pigmentary rutile TiO2 represented by the CMB2 samples, in the samples containing the Altiris® grades show a much better total visible light transmission, which is beneficial for plant growth in greenhouses. The commercially acceptable total visible light transmission in greenhouses, which is usually more than 70%, is reached with an addition level of up to about 0.6% Altiris® 550 and 800 in the final film, while not more than 0.2% of the conventional pigmentary rutile TiO2 of the R103 type could be added before reaching this same limit of acceptable total visible light transmission.

The average total visible light transmission as shown in Figure 1 is a first indication on the total visible light which is eventually reaching the plants. It is however also important to have an idea of the influence of the incident light angle on the total light transmission of the film, as the angle of light originating from the sun varies with the hour of the day.

A significant drawback of the currently used NIR technology (represented by CMB 1) is that the total light transmission is depending on the incident light angle.

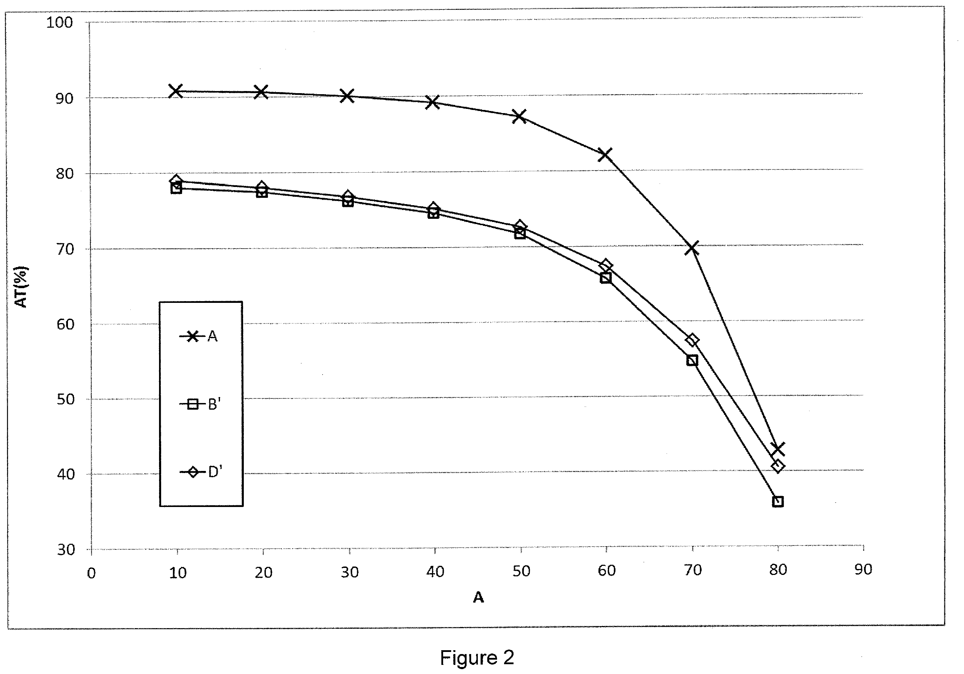

Figure 2 shows the angular transmittance (AT) in percentage, as a function of the angle of light incidence A, expressed in degrees (360° for a full circle, 0° being perpendicular light incidence), measured for three 150 µm EVA-based films: label A: with no additive, label B': 2.4% of Iriodin SHR 9870 added, and label D': 0.4% of Altiris® 550 added. The sample with label B' thus represents the conventional NIR technology. The sample with label D' represents a working example of the present invention. The concentrations for the samples B' and D' were chosen such that the total visible light transmission in the direction perpendicular to the film (= incident angle 0°) was the same for both samples and within the commercially acceptable range.

In particular at the higher incident angles A above 50°, the angular light transmittance of the Iriodin® SHR 9870 containing sample B' reduces significantly as compared to the Altiris® 550 grade containing sample D'. This experiment shows that the Altiris® type grades offer a beneficial effect when used in a greenhouse structure, because it will result in a higher total transmission of the light over the full day.

In warmer climates NIR blockers are commonly used, and it is in those climates not only important to have a high total visible light transmission, but also to obtain a higher diffuse part of this light transmittance. The diffuse light typically brings positive effects on crop growth, whereas an excessively high intensity of direct light may lead to plant damage because of local overexposure, as explained herein before.

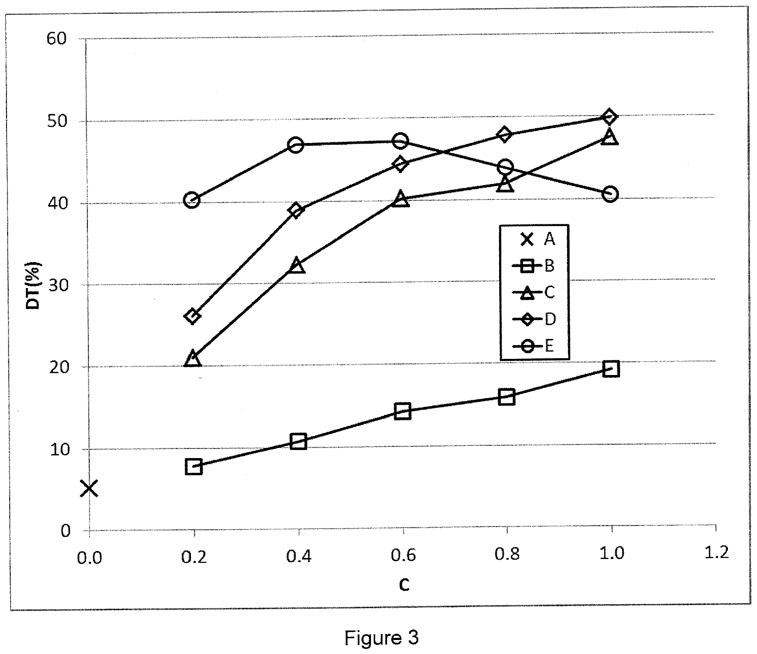

In Figure 3 the percentage DT(%) of diffuse light, expressed relative to the total transmitted visible light, is shown for a 150 µm EVA film as a function of the concentration C, expressed in wt%, of additive in the final film. Similar to Figure 1, the labels A, B, C, D and E stand respectively for the blank experiment, the CMB 1 containing Iriodin® SHR 9870, the IMB 2 containing the Altiris® 800 grade, the IMB 1 containing the Altiris® 550 grade, and the CMB 2 containing the Tipure R103-07.

The conventional NIR blocker, represented by CMB 1, demonstrated only a minor effect in diffusing the transmitted light. The Altiris® grades shown as C and D offer the advantage of providing a film having a high total light transmission combined with at the same time a high degree of diffusing the transmitted light, as compared to the conventional pigmentary rutile TiO2 of the R103 type, shown as E, of which Figure 1 has shown that the total visible light transmission is significantly lower. At the higher concentrations, i.e. more than 0.8% in a 150 µm film, the portion of diffused light may become higher for the Altiris® grades than for the conventional TiO2, and this is again in combination with a significantly higher total light transmission for the Altiris® grades.

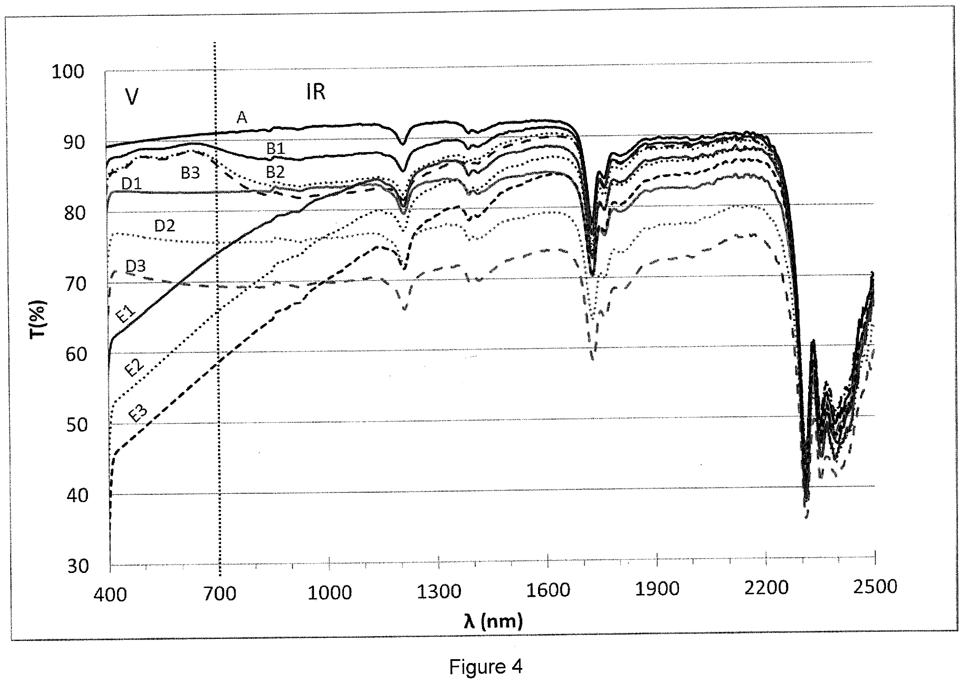

To show the difference in NIR transmission between the currently offered NIR blocking technology and the Altiris® 550 grade, a UV-VIS-NIR spectrum is shown in Figure 4 for different additive levels. The total light transmission of a 150 µm EVA film is shown as a function of the wavelength λ expressed in nanometers. The label A stands for the blank 150 µm film sample, labels B1, B2 and B3 respectively represent the 0.2 wt%, 0.4 wt% and 0.6 wt% Iriodin® SRH 9870 samples for the conventional NIR blocking technology, labels D1, D2 and D3 respectively represent the 0.2 wt%, 0.4 wt% and 0.6 wt% Altiris® samples, and labels E1, E2 and E3 respectively represent the 0.2 wt%, 0.4 wt% and 0.6 wt% Tipure R103 samples.

The visible light region (V) and the near-infrared light region (IR) are also indicated on Figure 4. At equal additive concentration, the conventional Iriodin® SHR 9870 pigment (B) is showing a much higher NIR transmission as compared to the conventional TiO2 (E) and also to the Altiris® grade (D). The Iriodin® SHR 9870 pigment (B) thus has a lower NIR blocking effect than the two alternatives shown (D and E), at equal concentrations. Remarkable is also that the shape of the curves for the Altiris grade (D) are significantly different from those for the conventional pigmentary TiO2 (E). The Altiris® 550 grade, as compared to conventional pigmentary TiO2 (R103), combines a significantly higher transmission in the visible light region for about equal NIR transmission levels.

From the spectra in Figure 4, the average total transmission of respectively the visible light (400-700 nm) and the NIR radiation (700-2300 nm) ranges were calculated, always relative to the intensity of the solar spectrum at the corresponding wavelength. The resulting average relative percentages of transmission of the visible light and the NIR parts of the solar spectrum are summarized in Table 2.

**Table 2**

| **Relative transmission (%) of the Solar Spectrum parts** | **Visible** | **NIR** |
|---|---|---|
| Blank 150 micron EVA | 90% | 91% |
| 0.2% Iriodin® SHR 9870 (CMB 1 - B1) | 89% | 88% |
| 0.2% Altiris® 550 (IMB 1 - D1) | 83% | 83% |
| 0.2% R103 (CMB 2 - E1) | 68% | 81% |
| 0.4% Iriodin® SHR 9870 (CMB 1 - B2) | 87% | 85% |
| 0.4% Altiris® 550 (IMB 1 - D2) | 76% | 76% |
| 0.4% R103 (CMB 2 - E2) | 59% | 76% |
| 0.6% Iriodin® SHR 9870 (CMB 1 - B3) | 87% | 84% |
| 0.6% Altiris® 550 (IMB 1 - D3) | 70% | 70% |
| 0.6% R103 (CMB 2 - E3) | 51% | 70% |

Table 2 shows that it is clear that at equal concentrations of additive, the conventional TiO2 is able to provide about equal NIR blocking but at the same time results in a much lower total visible light transmission which will have a negative effect on crop growth. Compared to the currently used NIR technology (Iriodin® SHR 9870), the Altiris® 550 type grade requires a much lower addition rate in order to reach an equal NIR blocking and at the same time offers in addition a higher light diffusion.

Having now fully described this invention, it will be appreciated by those skilled in the art that the invention can be performed within a wide range of parameters within what is claimed, without departing from the scope of the invention, as defined by the claims.

## Claims

1. The use of a particulate material in a polymer article for reducing the transmission of near-infrared radiation and for allowing transmission of visible light through the article, whereby
- the particulate material is based on crystalline titanium dioxide, i.e. containing TiO₂, in the anatase and/or the rutile crystal form,
- the particles of the particulate material are coated with an organic and/or inorganic coating layer,
- at least 20% by weight of the particulate material particles have a particle size of at least 400 nm and at most 1000 nm, and
- at least 1.5% by weight and at most 40% by weight of the particles in the particulate material have a particle size of less than 400 nm and at least 280 nm.

2. The use according to claim 1 for diffusing at least part of the photo-active radiation part of the visible light.

3. The use according to claim 1 or 2 for transmitting at least part of the UV light spectrum.

4. The use according to any one of the preceding claims wherein the particle size distribution of the particulate material particles shows a major peak in the range of 400-1000 nm, and preferably the particle size distribution of the particulate material particles being unimodal and the single peak thereof being in the specified range.

5. The use according to any one of the preceding claims wherein the particulate material particles have an average by weight particle size of at least 400 nm and up to 1200 nm.

6. The use according to any one of the preceding claims wherein at least 30% by weight of the particulate material particles have a particle size of at least 400 nm and at most 1000 nm.

7. The use according to any one of the preceding claims wherein at least 60% by weight of the particulate material particles have a particle size of at most 1000 nm.

8. The use according to any one of the preceding claims wherein at least 2.0%wt by weight of the particles have a particle size of less than 400 nm and at least 280 nm.

9. The use according to any one of the preceding claims wherein the coating layer comprises one or more oxide materials.

10. The use according to any one of the preceding claims wherein the article is a polymer film.

11. The use of a polymer composition containing the particulate material as defined in the use according to any one of the preceding claims in a concentration from 500 ppm by weight up to 70%wt, relative to the total weight of the composition, in the production of a polymer article for reducing the transmission of near-infrared radiation and for increasing the transmission of visible light through the article.

12. The use according to the preceding claim wherein the polymer composition is a masterbatch composition.

13. The use of a polymer film composition containing the particulate material as defined in the use according to any one of the preceding claims in a concentration from 500 ppm by weight up to 3.0%wt, relative to the total weight of the composition, in the production of a polymer film for reducing the transmission of near-infrared radiation and for increasing the transmission of visible light through the polymer film.

14. The use according to the preceding claim wherein the polymer film composition is based on a polymer selected from the list consisting of polyethylene, high-density polyethylene, low-density polyethylene, linear-low-density polyethylene, metallocene linear-low-density polyethylene, ethylene vinyl acetate copolymer, ethylene butenyl acetate copolymer, ethylene vinyl alcohol copolymer, polyethylene terephthalate copolymer, polycarbonate, polymethylmethacrylate, polypropylene, and mixtures thereof.

15. The use according to any one of claims 13-14 wherein the polymer film has at least one layer which is made from the polymer film composition.

## Patentansprüche

1. Die Anwendung eines partikelförmigen Materials in einem Polymerartikel zur Reduzierung der Übertragung von Nahinfrarotstrahlung und zur Zulassung der Übertragung von sichtbarem Licht durch den Artikel, wobei
- das partikelförmige Material auf einem kristallinen Titandioxid basiert, d. h. TiO₂ enthält, in der Kristallform Anatas und/oder Rutil,
- die Partikel des partikelförmigen Materials mit einer organischen und/oder anorganischen Beschichtung beschichtet sind,
- mindestens 20 Gew.-% der Partikel des partikelförmigen Materials eine Partikelgröße von mindestens 400 nm und höchstens 1.000 nm haben, und
- mindestens 1,5 Gew.-% und höchstens 40 Gew.-% der Partikel im partikelförmigen Material eine Partikelgröße von weniger als 400 nm und mindestens 280 nm haben.

2. Die Anwendung nach Anspruch 1 zur Streuung von zumindest einem Teil des Anteils photoaktiver Strahlung des sichtbaren Lichts.

3. Die Anwendung nach Anspruch 1 oder 2 zur Übertragung von zumindest einem Teil des UV-Lichtspektrums.

4. Die Anwendung nach irgendeinem der vorigen Ansprüche, wobei die Partikelgrößenverteilung der Partikel des partikelförmigen Materials eine hohe Spitze im Bereich von 400 bis 1.000 nm aufweist, und die Partikelgrößenverteilung der Partikel des partikelförmigen Materials bevorzugt unimodal ist und deren einzelne Spitze sich im angegebenen Bereich befindet.

5. Die Anwendung nach irgendeinem der vorigen Ansprüche, wobei die Partikel des partikelförmigen Materials eine durchschnittliche Partikelgröße nach Gewicht von mindestens 400 nm und bis zu 1.200 nm haben.

6. Die Anwendung nach irgendeinem der vorigen Ansprüche, wobei mindestens 30 Gew.-% der Partikel des partikelförmigen Materials eine Partikelgröße von mindestens 400 nm und höchstens 1.000 nm haben.

7. Die Anwendung nach irgendeinem der vorigen Ansprüche, wobei mindestens 60 Gew.-% der Partikel des partikelförmigen Materials eine Partikelgröße von höchstens 1.000 nm haben.

8. Die Anwendung nach irgendeinem der vorigen Ansprüche, wobei mindestens 2,0 Gew.-% der Partikel eine Partikelgröße von weniger als 400 nm und mindestens 280 nm haben.

9. Die Anwendung nach irgendeinem der vorigen Ansprüche, wobei die Beschichtung ein oder mehrere Oxidmaterialien umfasst.

10. Die Anwendung nach irgendeinem der vorigen Ansprüche, wobei der Artikel ein Polymerfilm ist.

11. Die Anwendung einer Polymerzusammensetzung, die das partikelförmige Material, wie definiert in der Anwendung nach irgendeinem der vorigen Ansprüche, in einer Konzentration von 500 Gew.-ppm bis zu 70 Gew.-% im Verhältnis zum Gesamtgewicht der Zusammensetzung enthält, in der Herstellung eines Polymerartikels zur Reduzierung der Übertragung von Nahinfrarotstrahlung und zur Steigerung der Übertragung von sichtbarem Licht durch den Artikel.

12. Die Anwendung nach dem vorigen Anspruch, wobei die Polymerzusammensetzung eine Masterbatch-Zusammensetzung ist.

13. Die Anwendung einer Polymerfilmzusammensetzung, die das partikelförmige Material, wie definiert in der Anwendung nach irgendeinem der vorigen Ansprüche, in einer Konzentration von 500 Gew.-ppm bis zu 3,0 Gew.-% im Verhältnis zum Gesamtgewicht der Zusammensetzung enthält, in der Herstellung eines Polymerfilms zur Reduzierung der Übertragung von Nahinfrarotstrahlung und zur Steigerung der Übertragung von sichtbarem Licht durch den Polymerfilm.

14. Die Anwendung nach dem vorigen Anspruch, wobei die Polymerfilmzusammensetzung auf einem Polymer basiert, ausgewählt aus der Liste bestehend aus Polyethylen, Polyethylen hoher Dichte, Polyethylen niedriger Dichte, linearem Polyethylen niedriger Dichte, linearem Metallocen-Polyethylen niedriger Dichte, Ethylen-Vinylacetat-Copolymer, Ethylen-Butenylacetat-Copolymer, EthylenVinylalkohol-Copolymer, Polyethylen-Terephthalat-Copolymer, Polycarbonat, Polymethylmethacrylat, Polypropylen und Mischungen davon.

15. Die Anwendung nach irgendeinem der Ansprüche 13 bis 14, wobei der Polymerfilm zumindest eine Schicht hat, welche aus der Polymerfilmzusammensetzung hergestellt ist.

## Revendications

1. Utilisation d'un matériau particulaire dans un article de polymère pour réduire la transmission d'un rayonnement infrarouge proche et pour permettre une transmission de la lumière visible à travers l'article, dans laquelle
- le matériau particulaire est basé sur du dioxyde de titane cristallin, c'est-à-dire contenant du TiO₂, sous forme cristalline anatase et/ou rutile,
- les particules du matériau particulaire sont enduites d'une couche de revêtement organique et/ou inorganique,
- au moins 20 % en poids des particules de matériau particulaire ont une taille de particule d'au moins 400 nm et d'au plus 1000 nm, et
- au moins 1,5 % en poids et au plus 40 % en poids des particules dans le matériau particulaire ont une taille de particule de moins de 400 nm et d'au moins 280 nm.

2. Utilisation selon la revendication 1 pour diffuser au moins une partie de la partie de rayonnement photo-actif de la lumière visible.

3. Utilisation selon la revendication 1 ou 2 pour transmettre au moins une partie du spectre de lumière UV.

4. Utilisation selon l'une quelconque des revendications précédentes, dans laquelle la répartition de tailles de particules des particules de matériau particulaire indique une crête majeure dans la plage de 400 à 1000 nm, et de préférence la répartition de tailles de particules des particules de matériau particulaire est unimodale et la crête unique de celle-ci est dans la plage spécifiée.

5. Utilisation selon l'une quelconque des revendications précédentes, dans laquelle les particules de matériau particulaire ont une moyenne de taille de particule en poids d'au moins 400 nm et d'au plus 1200 nm.

6. Utilisation selon l'une quelconque des revendications précédentes, dans laquelle au moins 30 % en poids des particules de matériau particulaire ont une taille de particule d'au moins 400 nm et d'au plus 1000 nm.

7. Utilisation selon l'une quelconque des revendications précédentes, dans laquelle au moins 60 % en poids des particules de matériau particulaire ont une taille de particule d'au plus 1000 nm.

8. Utilisation selon l'une quelconque des revendications précédentes, dans laquelle au moins 2,0 % en poids des particules ont une taille de particule de moins de 400 nm et d'au moins 280 nm.

9. Utilisation selon l'une quelconque des revendications précédentes, dans laquelle la couche de revêtement comprend un ou plusieurs matériaux d'oxyde.

10. Utilisation selon l'une quelconque des revendications précédentes, dans laquelle l'article est un film de polymère.

11. Utilisation d'une composition de polymère contenant le matériau particulaire défini dans l'utilisation selon l'une quelconque des revendications précédentes dans une concentration de 500 ppm en poids jusqu'à 70 % en poids, par rapport au poids total de la composition, dans la production d'un article de polymère pour réduire la transmission d'un rayonnement infrarouge proche et pour accroître la transmission de la lumière visible à travers l'article.

12. Utilisation selon la revendication précédente, dans laquelle la composition de polymère est une composition de mélange-maître.

13. Utilisation d'une composition de film de polymère contenant le matériau particulaire défini dans l'utilisation selon l'une quelconque des revendications précédentes dans une concentration de 500 ppm en poids jusqu'à 3,0 % en poids, par rapport au poids total de la composition, dans la production d'un film de polymère pour réduire la transmission d'un rayonnement infrarouge proche et pour accroître la transmission de la lumière visible à travers le film de polymère.

14. Utilisation selon la revendication précédente, dans laquelle la composition de film de polymère est basée sur un polymère sélectionné dans la liste se composant de polyéthylène, de polyéthylène à haute densité, de polyéthylène à basse densité, de polyéthylène à basse densité linéaire, de polyéthylène à basse densité linéaire métallocène, de copolymère d'éthylène et d'acétate de vinyle, de copolymère d'éthylène et d'acétate de butényle, de copolymère d'éthylène et d'alcool de vinyle, de copolymère de polyéthylène et de téréphtalate, de polycarbonate, de polyméthacrylate de méthyle, de polypropylène et de mélanges de ceux-ci.

15. Utilisation selon l'une quelconque des revendications 13 et 14, dans laquelle le film de polymère comporte au moins une couche qui est constituée de la composition de film de polymère.
